# EUROPÄISCHE PATENTSCHRIFT

(11) **EP 2 591 650 B1**
(45) Veröffentlichungstag und Bekanntmachung des Hinweises auf die Patenterteilung: **26.11.2014**
(21) Anmeldenummer: 12007116.2
(22) Anmeldetag: 11.10.2012
(51) Int. Cl.: A01B 35/22

(54) **Grubberzinken mit mittels einer Formschluss-Schnellbefestigung befestigbarer Scharspitze**
Cultivator tine with blade tip fixed by means of a quick-release coupling
Dent de cultivateur avec pointe de lame pouvant être fixée au moyen d'une fixation rapide

(30) Priorität: 08.11.2011 DE 202011107599 U
(43) Veröffentlichungstag der Anmeldung: 15.05.2013
(73) Patentinhaber: Kerner, Gabriele, 89344 Aislingen (DE); Kerner, Jürgen, 89344 Aislingen (DE); Kerner, Stefan, 89344 Aislingen (DE); Kerner, Tobias Josef, 89344 Aislingen (DE); Kerner, Anja Maria, 89344 Aislingen (DE)
(72) Erfinder: Kerner, Tobias, 89344 Aislingen (DE)
(74) Vertreter: Gallo, Wolfgang

(56) Entgegenhaltungen:
- EP-A1- 1 504 639
- AU-B2- 585 175
- US-A1- 2006 231 275

## Beschreibung

Die Erfindung betrifft einen Grubberzinken mit einem Stiel und einem daran angebrachten Scharträger mit daran auswechselbar montierter Scharspitze.

Ein derartiger Grubberzinken ist aus der EP-1 504 639 A1 bekannt. Diese Druckschrift beschreibt einen Grubberzinken, an dessen Scharträger ein Mittelschar und ein Flügelschar angebracht ist, wobei das Mittelschar und das Flügelschar als gesonderte Teile ausgebildet und einzeln auswechselbar am Scharträger befestigt sind. Die Scharspitze des Mittelschars ist bei diesem bekannten Grubberzinken mit einem an der Scharspitzenplatte angeschweißten und davon wegragenden Schraubenbolzen ausgebildet, der durch ein Loch im Scharträger gesteckt und auf den eine Mutter aufgeschraubt wird, um die Scharspitze am Scharträger zu befestigen.

Eine weiterer Grubberzinken mit den Merkmalen des Oberbegriffs des Anspruchs 1 ist aus der US 2006/0231275 bekannt.

Zum Auswechseln der Scharspitze, wenn diese nach entsprechendem Gebrauch verschlissen ist, muss die Mutter gelöst werden. Wegen der anhaftenden Verschmutzungen nach längerem Gebrauch im Ackerboden ist das nicht ganz einfach, und es ist ein Schraubenschlüssel notwendig. Da der Scharträger eine nach unten weisende U-förmige Bauform mit zwei seitlich angeformten Schenkelplatten hat, um das Flügelschar halten zu können, befindet sich der Schraubenbolzen der Scharspitze mit der Mutter an der Unterseite des Scharträgers zwischen diesen beiderseitigen Schenkelplatten, was die Zugänglichkeit zur Mutter mittels eines Schraubenschlüssels zusätzlich erschwert und das Austauschen der Scharspitze mühsamer macht. Dabei ist im Auge zu behalten, dass ein Bodengrubbergerät viele Gubberzinken aufweist, so dass das Austauschen der Scharspitzen einen beträchtlichen Aufwand erfordert.

Aufgabe der Erfindung ist es, eine Konstruktion zu schaffen, die das Auswechseln der Scharspitzen deutlich erleichtert.

Diese Aufgabe wird gemäß der Erfindung durch die im Anspruch 1 angegebene Anordnung gelöst. Vorteilhafte Ausgestaltungen der Erfindung sind Gegenstand der Unteransprüche.

Bei der erfindungsgemäßen Konstruktion erfolgt die Befestigung der Scharspitzenplatte am Scharträger nicht mehr mit einem Schraubenbolzen und einer Mutter, sondern mittels einer Formschluss-Rastverbindung, die ein Schnellwechselsystem verkörpert, so dass zum Anbringen einer Scharspitze am Scharträger und zum Lösen der Scharspitze vom Scharträger kein Schraubenschlüssel oder ähnliches Werkzeug mehr erforderlich ist, sondern ein Hammer genügt, um die Scharspitze am Scharträger anzubringen und sicher zu fixieren, und sie auch wieder zu lösen.

Bei der erfindungsgemäßen Anordnung ist zwischen den beiden Schenkelplatten an der Unterseite des Scharträgers ein Bolzen vorgesehen, der zwischen diesen Schenkelplatten eingeschweißt sein kann, und die Scharspitzenplatte ist an ihrer Unterseite mit einem in Längsrichtung verlaufenden Vorsprung versehen, der zum einen in eine nach vorne öffnende Führungsnut der Scharspitzenauflageplatte des Scharträgers eingreift, und zum anderen ein elastisches Rastelement bildet, das über den zwischen den beiden Schenkelplatten des Scharträgers verlaufenden Bolzen einrastet, wenn die Scharspitze mit ihrem unteren Vorsprung in die Führungsnut der Scharspitzenauflageplatte von vorne eingeführt wird. Zum Verbinden der Scharspitze mit dem Scharträger sind also nur ein oder zwei Hammerschläge notwendig, und zum Lösen der Scharspitze vom Scharträger ebenso.

Vorzugsweise ist der Vorsprung an der Unterseite der Scharspitzenplatte durch eine mittig angeordnete Querplatte gebildet, die mit der Scharspitzenplatte beispielsweise durch Schweißen verbunden ist, und die vorzugsweise in einen Längsschlitz der Scharspitzenplatte eingesetzt ist. Diese Querplatte hat einen eingearbeiteten Längsschlitz, der den Querbolzen aufnimmt, und in dessen eine von der Scharspitzenplatte entfernt gelegene Schlitzflanke eine Rastöffnung eingearbeitet ist, mit welcher der diese Schlitzflanke auf weisende, eine mit der übrigen Querplatte ausgebildete Federzunge darstellende Teil der Querplatte rastend mit dem Querbolzen zusammenwirken kann. Vorzugsweise erstreckt sich die Querplatte auch nach oben über die Scharspitzenplatte hinaus und bildet an deren Oberseite eine nach rückwärts ansteigende dreieckförmige Flosse, die im Betrieb schollenaufbrechend wirkt.

Ein Ausführungsbeispiel der Erfindung wird nachstehend unter Bezug auf die anliegenden Zeichnungen mehr im einzelnen beschrieben. In den Zeichnungen zeigt:
- Fig. 1: in perspektivischer Darstellung den Scharspitzenbereich eines Grubberzinkens nach der Erfindung, und
- Fig. 2: eine geschnittene Seitenansicht der Scharspitze.

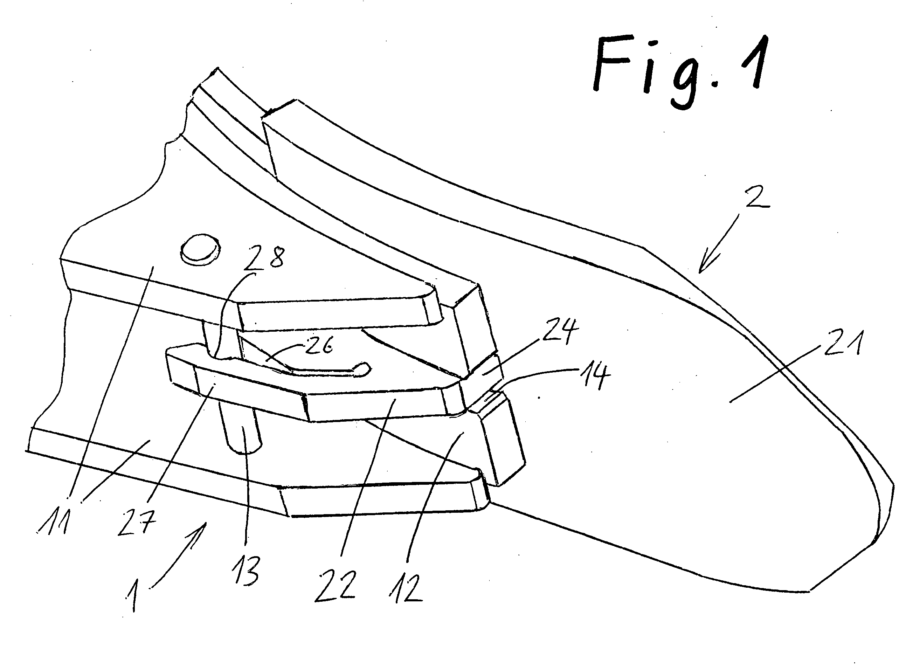

Fig. 1 zeigt in perspektivischer Untersicht den Scharspitzenabschnitt des Grubberstiels, nämlich den vorderen Endbereich des Scharträgers mit dem Mittelschar und der sich daran vorne anschließenden Scharspitze.

Der Scharträger 1 hat in seinem die Scharspitze tragenden vorderen Bereich eine nach unten weisende U-Form mit zwei seitlichen, nach unten ragenden Schenkelplatten 11 und einer dazwischen verlaufenden Auflageplatte 12, auf welcher der hintere Endteil der Scharspitzenplatte 21 der Scharspitze 2 aufliegt. Die weiter hinten liegenden Teile des Scharträgers interessieren hier nicht; diese weisen Mittel zum Anbringen eines Flügelschars auf.

Zwischen den Schenkelplatten 11 des Scharträgers 1 verläuft ein Rundbolzen 13.

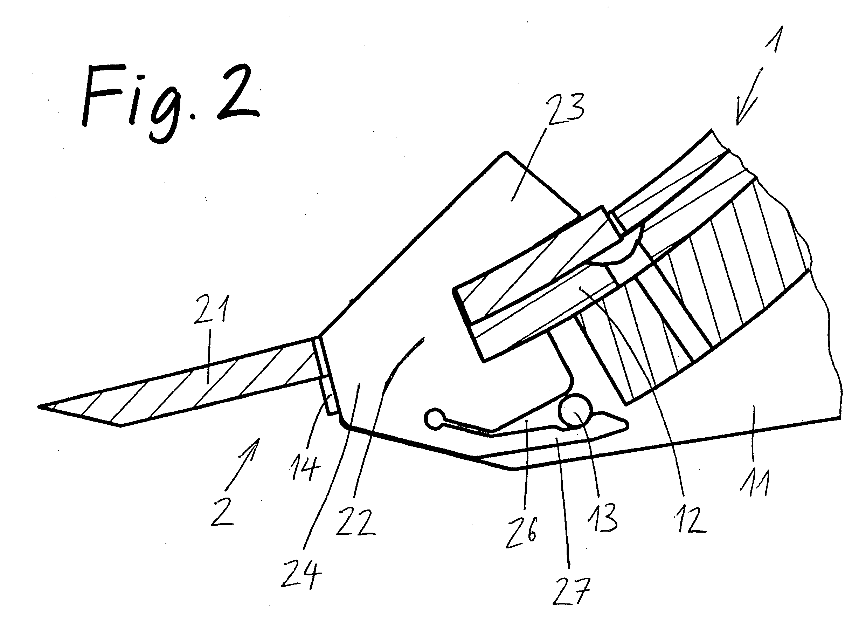

Die Einzelheiten der Ausbildung der Scharspitze 2 sind besonders gut in der teilweise geschnittenen Seitenansicht nach Fig. 2 sichtbar.

Die Scharspitzenplatte 21 weist in ihrem hinteren Bereich einen mittigen, in Längsrichtung verlaufenden Schlitz auf, in den eine Querplatte 22 eingesetzt ist. Die Querplatte 22 ist mit der Scharspitzenplatte 21 verschweißt. Die Querplatte ragt an der Oberseite der Scharspitzenplatte 21 mit einem Ansatz 23 in Gestalt einer nach rückwärts ansteigenden Dreiecksflosse über diese hinaus, und ragt an der Unterseite der Scharspitzenplatte 21 über diese hinaus, um mit dem nahe an der Scharspitzenplatte gelegenen Bereich einen Führungskeil 24 zu bilden, der in eine in Längsrichtung verlaufende mittige Führungsnut 14 der Auflageplatte 12 des Scharträgers für die Scharspitzenplatte 21 eingreift. Im unteren Bereich ist die Querplatte 22 mit einem eingearbeiteten, etwa in Längsrichtung verlaufenden Schlitz 26 ausgebildet, welcher den untersten Teil der Querplatte 22 von deren übrigen Bereich abtrennt. Dieser unterste Bereich der Querplatte 22 bildet eine Federzunge 27, die an ihrer den Schlitz 26 begrenzenden Seite mit einer halbrunden Ausnehmung 28 versehen ist, die eine Rastöffnung bildet, die mit dem Rundbolzen 13 zusammen wirkt, der zwischen den beiden Schenkelplatten 11 verläuft.

Aufgrund dieser Anordnung ist die Scharspitze ohne Schrauben oder dergleichen am Scharträger im Wege einer Schnellbefestigung montierbar und lösbar. Mit ein oder zwei Hammerschlägen auf die Scharspitze wird diese auf den Scharträger aufgeschoben, wobei die Querplatte 22 in den Schlitz 14 des Scharträgers eingreift und die Federzunge 27 über den Rundbolzen 13 gleitet, bis sie dort mit der halbrunden Rastöffnung 28 eingreift. In diesem montierten Zustand ist die Scharspitze fest und sicher am Scharträger geführt und auch durch die Rastverbindung gesichert. Das Lösen der Scharspitze vom Scharträger kann wiederum mit lediglich ein oder zwei Hammerschlägen erfolgen, wobei hier die nach hinten weisende Fläche 29 des flossenartigen oberen, als Schollenbrecher wirkenden Fortsatzes 23 der Querplatte 22 sich dafür anbietet.

## Patentansprüche

1. Grubberzinken mit einem Stiel und einem daran angeordneten Scharträger (1), an welchem eine Scharspitze (2) lösbar befestigt ist, wobei der Scharträger (1) in seinem die Scharspitze (2) haltenden Bereich eine nach unten weisende U-Form mit zwei beiderseitigen, nach unten weisenden Schenkelplatten (11) und einer dazwischen verlaufenden Auflageplatte (12) aufweist, auf welcher die Scharspitzenplatte (21) der Scharspitze (2) aufliegt, und mit an der Scharspitzenplatte (21) angeordneten, die Auflageplatte (12) des Scharträgers (1) durchdringenden Befestigungsmitteln,
wobei die Befestigungsmittel einen an der Unterseite der Scharspitzenplatte (21) angeordneten Vorsprung (24, 27) umfassen, der an der Unterseite der Scharspitzenplatte (21) einen längsverlaufenden, in einen Führungsschlitz (14) der Auflageplatte (12) des Scharträgers eingreifenden Führungskeil (24) bildet, **dadurch gekennzeichnet, dass** der Vorsprung (24, 27) auch eine nach rückwärts weisende Federzunge (27) bildet, die mit einer Rastmulde (28) mit einem zwischen den beiden Schenkelplatten (11) verlaufenden Bolzen (13) zusammenwirkt.

2. Grubberzinken nach Anspruch 1, wobei der Bolzen (13) ein Rundbolzen ist, und die Rastmulde (28) eine halbrunde Aussparung ist.

3. Grubberzinken nach Anspruch 1 oder 2, wobei die Befestigungsmittel durch eine mit der Scharspitzenplatte (21) verbundene Querplatte (22) gebildet sind, die in ihrem nahe an der Unterseite der Scharspitzenplatte (21) befindlichen Bereich den Führungskeil (24) bildet, und die mit einem unterhalb desselben liegenden davon durch einen eingearbeiteten Schlitz (26) getrennten Bereich die Federzunge (27) bildet.

4. Grubberzinken nach Anspruch 3, wobei die Querplatte (22) in einem im hinteren Bereich der Scharspitzenplatte (21) eingearbeiteten längsverlaufenden Schlitz eingesetzt ist.

5. Grubberzinken nach Anspruch 4, wobei die Querplatte (22) in Gestalt eines nach oben ragenden Ansatzes (23) über die Oberseite der Scharspitzenplatte (21) hinausragt.

6. Grubberzinken nach Anspruch 5, wobei der nach oben über die Scharspitzenplatte (21) überstehende Ansatz (23) der Querplatte (22) die Gestalt einer nach rückwärts ansteigenden Dreiecksflosse hat.

## Claims

1. A cultivator tine having a stem and share support (1) arranged thereon to which a share point (2) is detachably mounted, wherein the share support (1), in its area holding the share point (2), presents a downwardly facing U shape with two downwardly facing leg plates (11) on both sides and a support plate (12) extending therebetween on which the share point plate (21) of the share point (2) rests, and with fixing means arranged on the share point plate (21) and penetrating the support plate (12) of the share support (1),
wherein the fixing means comprise a projection (24, 27) arranged on the underside of the share point plate (21), the projection forming a guiding wedge (24) on the underside of the share point plate (21) that extends in the longitudinal direction and engages with a guiding slot (14) of the support plate (12) of the share support,
**characterised in that** the projection (24, 27) also forms an elastic tongue (27) that faces backwards and co-operates with a locking trough (28) with a stud (13) extending between the two leg plates (11).

2. The cultivator tine according to claim 1, wherein the stud (13) is a round stud, and the locking trough (28) is a semi-circular recess.

3. The cultivator tine according to claim 1 or 2, wherein the fixing means are formed by a transverse plate (22) connected to the share point plate (21), the transverse plate forming the guiding wedge (24) in its area near the underside of the share point plate (21), and forming the elastic tongue (27) with an area beneath the wedge and being separated therefrom by means of a slot (26) formed therein.

4. The cultivator tine according to claim 3, wherein the transverse plate (22) is inserted into a slot formed into the back area of the share point plate (21) and extending in the longitudinal direction.

5. The cultivator tine according to claim 4, wherein the transverse plate (22) projects above the upper side of the share point plate (21) in the shape of a lug (23) projecting upwardly.

6. The cultivator tine according to claim 5, wherein the lug (23) of the transverse plate (22) projecting upwardly above the share point plate (21) presents the shape of a triangular fin ascending to the back.

## Revendications

1. Dent de cultivateur avec un manche et un support de soc (1) disposé à celui-ci et auquel une pointe de soc (2) est fixée de manière amovible, le support de soc (1) présentant, dans sa zone tenant la pointe de soc (2), une forme en U tournée vers le bas avec deux plaques de branche (11) des deux cotés et tournées vers le bas, et une plaque d'appui (12) s'étendant entre celles-ci, sur laquelle la plaque de pointe de soc (21) de la pointe de soc (2) est supportée, et avec des moyens de fixation disposés sur la plaque de pointe de soc (21) et pénétrant la plaque d'appui (12) du support de soc (1),
le moyens de fixation comportant une saillie (24, 27) disposée sur la face inférieure de la plaque de pointe de soc (21), la saillie formant, sur la face inférieure de la plaque de pointe de soc (21), une cale de guidage (24) s'étendant dans la direction longitudinale et s'engageant dans une fente de guidage (14) de la plaque d'appui (12) du support de soc,
**caractérisée en ce que** la saillie (24, 27) aussi forme une languette élastique (27) tournée vers l'arrière qui coopère avec un creux de verrouillage (28) avec un boulon (13) s'étendant entre les deux plaques de branche (11).

2. Dent de cultivateur selon la revendication 1, dans lequel le boulon (13) est un boulon rond, et le creux de verrouillage (28) est un dégagement demi-rond.

3. Dent de cultivateur selon la revendication 1 ou 2, dans lequel les moyens de fixation sont formés par une plaque transversale (22) reliée à la plaque de pointe de soc (21), la plaque transversale formant, dans sa zone proche à la face inférieure de la plaque de pointe de soc (21), la cale de guidage (24), et formant la languette élastique (27) avec une zone située sous la cale et séparée de celle-ci par une fente (26) incorporée.

4. Dent de cultivateur selon la revendication 3, dans lequel la plaque transversale (22) est insérée dans une fente incorporée dans la zone arrière de la plaque de pointe de soc (21) et s'étendant dans la direction longitudinale.

5. Dent de cultivateur selon la revendication 4, dans lequel la plaque transversale (22) dépasse au-delà de la face supérieure de la plaque de pointe de soc (21) sous forme d'un bout (23) saillant vers le haut.

6. Dent de cultivateur selon la revendication 5, dans lequel le bout (23) de la plaque transversale (22) qui dépasse au-delà de la plaque de pointe de soc (21) vers le haut présente une forme d'ailette triangulaire ascendante vers l'arrière.
